Europäisches Patentamt

(19) European Patent Office

Office européen des brevets

(11) Numéro de publication: **0 245 415**
**B1**

(12) **FASCICULE DE BREVET EUROPEEN**

(45) Date de publication du fascicule du brevet: **26.09.90**

(51) Int. Cl.⁵: **H 02 P 6/02, H 02 H 7/08**

(21) Numéro de dépôt: **86906844.5**

(22) Date de dépôt: **17.11.86**

(86) Numéro de dépót international:
**PCT/FR86/00388**

(87) Numéro de publication internationale:
**WO 87/03433 04.06.87 Gazette 87/12**

(54) **DISPOSITIF LIMITEUR DU COURANT D'ALIMENTATION POUR UN MOTEUR ELECTRIQUE A COURANT CONTINU.**

(30) Priorité: **21.11.85 FR 8517224**

(43) Date de publication de la demande:
**19.11.87 Bulletin 87/47**

(45) Mention de la délivrance du brevet:
**26.09.90 Bulletin 90/39**

(84) Etats contractants désignés:
**DE IT SE**

(56) Documents cités:
**EP-A- 85 901**
**EP-A-0 089 150**
**DE-A-3 218 740**
**GB-A-2 092 780**
**US-A-4 510 422**

(73) Titulaire: **VALEO**
**64, avenue de la Grande Armée**
**F-75848 Paris Cédex 17 (FR)**

(72) Inventeur: **PERILHON, Alain, François**
**109, rue Lafayette**
**F-91700 Ste-Geneviève-des-Bois (FR)**

(74) Mandataire: **Michardière, Bernard et al**
**C/O CABINET PEUSCET 68, rue d'Hauteville**
**F-75010 Paris (FR)**

Courier Press, Leamington Spa, England.

**Description**

L'invention est relative à un dispositif limiteur du courant d'alimentation pour un moteur électrique à courant continu, ce moteur étant destiné à entraîner une charge qui oppose un couple résistant augmentant en fonction de la vitesse de rotation, le dispositif limiteur étant agencé pour établir une limitation du courant en fonction de la vitesse de rotation du moteur selon une loi qui tient compte de la variation de la charge entraînée par le moteur en fonction de la vitesse de rotation.

Un dispositif limiteur de ce genre est décrit dans EP—A—0 085 901. Le dispositif limiteur de ce document antérieur est agencé pour intervenir essentiellement en cas d'erreur de comportement, dans la conduite du véhicule, de la part du conducteur comme expliqué notamment page 4, lignes 9 à 30; ce peut être, par exemple, le cas où le conducteur, pour faire gravir une côte par le véhicule, laisse engagé un rapport de vitesse trop élevé. Le dispositif limiteur de ce document antérieur permet d'éviter que dans le cas de telles erreurs de comportement, des intensités trop élevées circulent dans les armatures du moteur à courant continu. Toutefois, en cas de fonctionnement normal du moteur, c'est-à-dire dans le cas où le conducteur ne commet pas d'erreur de comportement, le dispositif limiteur n'intervient pas.

L'invention concerne l'alimentation des moteurs électriques à courant continu à commutation électronique, moteurs dont le stator comporte plusieurs enroulements décalés angulairement et alimentés successivement par des moyens de commutation électronique, pour créer un champ tournant.

On sait que les moyens de commutation électronique peuvent comprendre divers composants, notamment des transistors, relativement fragiles et susceptibles d'être détruits par des surintensités trop fortes. Or, dans des conditions tout à fait normales de fonctionnement, sans erreur de comportement du conducteur, l'intensité traversant le stator du moteur, au démarrage, est élevée, car la force contre-électromotrice du moteur est faible, puisque le rotor, au démarrage, est arrêté et ne prend sa vitesse que progressivement; une telle intensité peut créer un endommagement des moyens de commutation électronique qui doivent donc être prévus en conséquence, alors qu'en régime établi l'intensité est beaucoup plus faible. Il en résulte un surdimensionnement des moyens de commutation électronique, pour pouvoir assurer le démarrage sans problème majeur, et un coût élevé. Des problèmes semblables peuvent surgir si le moteur électrique entraînant la charge est bloqué accidentellement.

L'invention a pour but, surtout, de fournir un dispositif limiteur du courant d'alimentation pour un moteur électrique à courant continu à commutation électronique qui permette de réduire considérablement les risques d'endommagement des moyens de commutation électronique, sans gêner le fonctionnement du moteur en régime établi, et sans entraîner un coût prohibitif. L'invention a également pour but de fournir un dispositif limiteur qui soit d'une réalisation simple et efficace.

Selon l'invention, un dispositif limiteur du courant d'alimentation pour un moteur électronique à courant continu, ce dispositif limiteur étant destiné à un moteur électrique à commutation électronique, moteur dont le stator comporte plusieurs enroulements décalés angulairement et alimentés successivement par des moyens de commutation électronique pour créer un champ tournant, est caractérisé par le fait qu'il n'autorise qu'un courant légèrement supérieur à celui nécessaire en fonctionnement normal, et que la loi du limitation du courant est prévue pour assurer, au démarrage du moteur, une garde suffisante pour assurer une montée en vitesse satisfaisante du moteur, cette loi de variation du courant, en fonction de la vitesse de rotation du moteur, présentant une partie ascendante, suivie d'un palier.

De préférence, la partie ascendante de la loi de variation du courant est formée sensiblement par un segment de droite.

Le dispositif limiteur comprend des moyens sensibles au paramètre de fonctionnement du moteur, constitué par la vitesse de rotation, propres à établir un signal de sortie représentatif de la valeur du paramètre et des moyens de commande du courant d'alimentation du moteur électrique en fonction de ce signal de sortie.

Avantageusement, l'alimentation du moteur électrique est assurée par un dispositif hacheur à rapport cyclique réglable par des moyens d'ajustement. Le dispositif limiter comprend alors des moyens de comparaison du signal de sortie des moyens sensibles et d'un signal provenant des moyens d'ajustement, ces moyens de comparaison étant propres à commander le rapport cyclique correspondant au plus faible de ces deux signaux.

Les susdits moyens sensibles fournissent un signal de sortie représentatif de la valeur de la vitesse.

De préférence, le dispositif hacheur ou découpeur comprend un transistor MOS à effet de champ (FET), à canal N.

Avantageusement, le dispositif limiteur est agencé de manière à récupérer les énergies de surtension des enroulements du stator, qui apparaissent notamment en fin de commande de chaque enroulement, pour établir la tension de fonctionnement du transistor MOS de canal N.

La fréquence de découpage peut être de l'ordre de 20 KHz.

Les moyens de commande du rapport cyclique comprennent, de préférence, un circuit "PWM" propre à convertir les variations d'une tension de commande en variation du rapport cyclique d'un signal rectangulaire: un convertisseur fréquence/tension qui reçoit, à l'entrée, des signaux dont la fréquence est proportionnelle à la vitesse de rotation du moteur et qui fournit, à sa sortie, une tension image de cette vitesse; des moyens d'ajustement manuel, notamment constitués par un potentiomètre, de la valeur du rapport cyclique et des moyens pour comparer le signal de sortie du convertisseur fréquence/tension et celui des moyens d'ajustement manuel, ces moyens de comparaison étant propres à faire établir le rapport cyclique qui correspond au plus faible signal provenant du convertisseur ou des moyens d'ajustement.

Le dispositif limiteur défini précédemment est avantageusement appliqué à un moteur à commutation électronique dont le stator comporte trois phases ou enroulements, commandés chacun, par un seul transistor ou élément interrupteur équivalent.

Ce dispositif limiteur peut être avantageusement utilisé pour un moteur électrique entraînant un ventilateur, une turbine ou analogue, qui présente un couple résistant sensiblement proportionnel au carré de la vitesse de rotation; la loi de variation du rapport cyclique en fonction de la vitesse de rotation du moteur est alors choisie sensiblement linéaire avec une pente positive, dans une première partie, et avec une ordonnée à l'origine qui correspond à un couple de démarrage relativement faible.

L'invention concerne également un moteur électrique à courant continu, à commutation électronique, équipé d'un dispositif limiteur tel que défini précédemment.

L'invention consiste, mises à part les dispositions exposées ci-dessus, en un certain nombre d'autres dispositions dont il sera plus explicitement question ci-après à propos d'un mode de réalisation particulier décrit avec références aux dessins ci-annexés, mais qui n'est nullement limitatif.

La figure 1, de ces dessins, est un schéma électrique simplifié du stator d'un moteur électrique à courant continu à commutation électronique.

La figure 2 est un diagramme illustrant la variation du couple et de l'intensité dans un moteur électrique classique, en fonction de la vitesse de rotation, ainsi que la variation du couple résistant d'une charge entraînée par ce moteur.

La figure 3 est un diagramme illustrant, semblablement à la figure 2, la loi de limitation du couple et du courant du moteur électrique selon l'invention.

La figure 4 est un schéma général simplifié d'un dispositif limiteur de courant permettant d'obtenir le diagramme de la figure 3.

La figure 5 est un schéma plus détaillé d'un exemple de réalisation du dispositif de la figure 4.

La figure 6, enfin, est un schéma d'un montage permettant de récupérer les énergies de surtension.

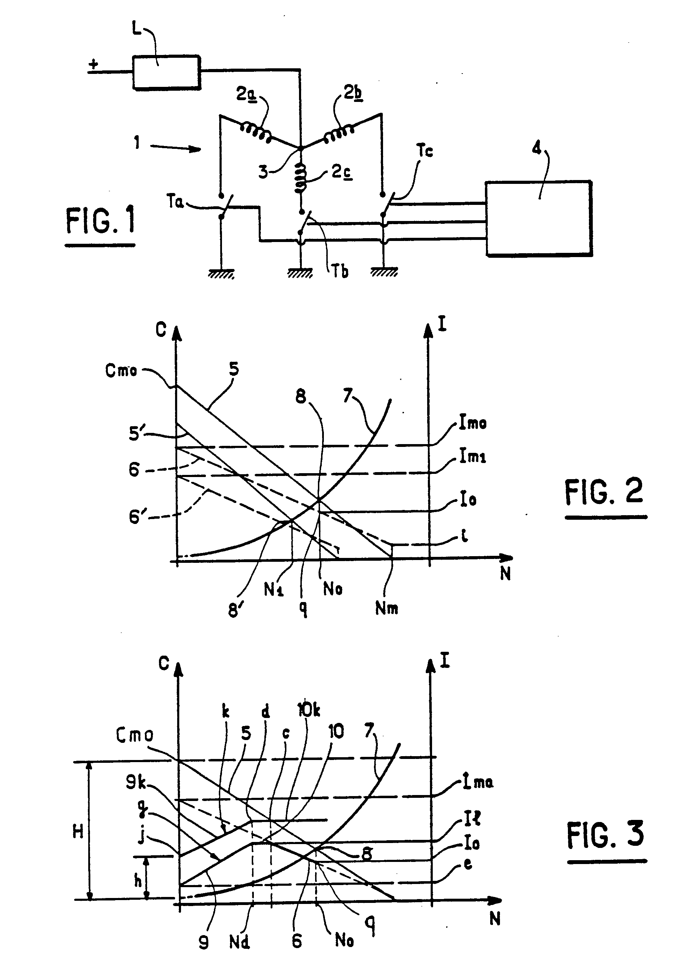

En se reportant à la figure 1 des dessins, on peut voir le schéma du stator 1 d'un moteur électrique à courant continu, à commutation d'électronique. Ce stator comporte trois enroulements 2a, 2b, 2c décalés angulairement de 120°, branchés en étoile. Le point milieu ou point commun 3 de ces enroulements est relié à une borne de la source d'alimentation, par exemple la borne +.

L'autre extrémité de chaque enroulement 2a, 2b, 2c est reliée à la masse par des moyens de commutation Ta, Tb, Tc avantageusement formés par trois transistors MOS à effet de champ (FET) associés respectivement à chaque enroulement.

Les moyens de commutation sont commandés par un circuit logique 4 qui permet leur alimentation successive, de manière à créer un champ tournant qui provoque la mise en rotation du rotor (non représenté) du moteur. Ce rotor est généralement du type à aimants permanents.

Il est clair que le nombre d'enroulements du stator peut être différent de trois, par exemple égal à deux, ou quatre, ou plus.

Un dispositif L, schématiquement représenté sur la figure 1, est prévu pour limiter l'intensité du courant d'alimentation du stator 1.

Avant de décrire ce dispositif limiteur, il convient d'effectuer quelques rappels sur les moteurs électriques, pour bien situer l'invention.

On sait que dans la plupart des moteurs électriques, y compris les moteurs électriques à commutation électronique, l'intensité du courant électrique traversant le moteur, et plus particulièrement le stator dans l'exemple considéré, se trouve limitée naturellement quand la vitesse de rotation du moteur est élevée, en raison de la force contre-électromotrice développée par le moteur.

Par contre, au démarrage du moteur, la vitesse de rotation est faible: il en est de même pour la force contre-électromotrice de telle sorte qu'un courant important, dont l'intensité diminue quand la vitesse de rotation augmente, traverse le moteur.

Le contrôle de la vitesse de rotation d'un moteur à courant continu, qui entraîne une charge, est réalisé facilement en contrôlant, c'est-à-dire en réglant, l'intensité du courant qui traverse ce moteur en régime établi.

Le contrôle de l'intensité du courant électrique peut être réalisé de diverses manières; il est avantageux d'utiliser le découpage ou hachage du courant continu, avec un rapport cyclique variable.

Pour la commande d'une vitesse réglable, le couple étant supposé connu et relativement constant pour chaque valeur de la vitesse, il suffira de commander un rapport cyclique déterminé pour obtenir la vitesse désirée.

La figure 2 illustre ces différents réglages et possibilités.

Sur cette figure 2, on a porté, sur l'axe des ordonnées situé à gauche, les valeurs du couple C et, sur l'axe des ordonnées situé à droite, les valeurs de l'intensité I du courant traversant le stator du moteur. En abscisses, on a porté la vitesse N de rotation du moteur.

La courbe 5, tracée en trait plein, représente la variation du couple du moteur électrique en fonction de la vitesse de rotation. Pour simplifier, la courbe 5 est représentée sous forme d'un segment de droite inclinée, à pente négative. Selon les moteurs, cette courbe peut avoir des allures moins régulières que celle représentée schématiquement sur la figure 2 mais elle respecte, presque toujours en pratique, une décroissance vers les vitesses de rotation élevées.

A vitesse nulle, ce qui correspond à un moteur bloqué ou à un début de démarrage, le couple moteur est maximum et prend la valeur de Cm0.

La courbe 6 en tirets représente la variation de l'intensité du courant en fonction de la vitesse de rotation. Cette courbe 6 est schématisée sous la forme d'un segment de droite. La valeur de l'intensité est à lire sur l'axe des ordonnées situé à droite. L'intensité maximale qui traverse le stator du moteur se produit au démarrage ou moteur bloqué et correspond à la valeur Im0.

A la vitesse maximale Nm de rotation du moteur, le couple utile du moteur est devenu nul tandis que le courant absorbé est minimal et égal à une valeur i qui correspond à un courant absorbé juste suffisant pour vaincre les pertes propres du moteur.

La courbe 7 représente les variations du couple résistant d'une charge entraînée par le moteur, en fonction de la vitesse de rotation. On a considéré que la charge entraînée par le moteur électrique était un ventilateur pour lequel le couple résistant est sensiblement proportionnel au carré de la vitesse.

D'autres allures de courbes du couple résistant que celle de la courbe 7 sont possibles. En général, le couple résistant augmente avec la vitesse.

L'ensemble du système trouve son équilibre au point 8 d'intersection des courbes 5 et 7, point pour lequel le couple moteur est égal au couple résistant. Il en résulte un courant Io, correspondant au point q sur la courbe du courant. La vitesse de rotation est No.

La courbe 5 correspond au fonctionnement du moteur alimenté au maximum de ses possibilités, c'est-à-dire à pleine puissance, ce qui correspond à un rapport cyclique égal à 1 au niveau du dispositif limiteur L.

Il est toutefois possible d'alimenter le moteur électrique sous une puissance plus faible, en agissant au niveau du limiteur L pour réduire la valeur du rapport cyclique. On rappelle que le rapport cyclique, pour une période considérée, est égal au rapport du temps de conduction du dispositif L à la durée totale de la période considérée.

Pour une puissance plus faible du moteur électrique, la courbe 5' du couple se situe au-dessous de la courbe 5 et lui est sensiblement parallèle. Le point de fonctionnement 8' du système s'établit à une vitesse N1 inférieure à No. On voit ainsi qu'en agissant sur la puissance utile du moteur, par variations du rapport cyclique dans l'exemple considéré, on peut régler la vitesse d'équilibre N1 du système à une valeur comprise entre la vitesse maximale possible No et la vitesse nulle.

Le réglage de la puissance utile du moteur engendre un réseau de courbes 5' du couple moteur sensiblement parallèles à la courbe 5 et situées au-dessous de cette courbe, et un réseau de courbes d'intensité 6' sensiblement parallèles à la courbe 6 et situées au-dessous.

Il apparaît immédiatement, d'après les courbes de la figure 2, que l'intensité du courant Im1 du moteur à vitesse nulle (moteur bloqué ou démarrage) est d'autant plus faible que la puissance utile du moteur et donc la vitesse N1 à l'équilibre du système est plus faible.

Bien que dans certaines applications on puisse souhaiter un couple important au démarrage (couple à vitesse nulle du moteur), ce qui est le cas en particulier des moteurs de traction, il existe de nombreuses applications dans lesquelles le couple nécessaire à très basse vitesse peut être faible. Ceci est vrai, notamment, lorsque la courbe du couple résistant en fonction de la vitesse à l'allure de la courbe 7 sur la figure 2 et correspond, par exemple, au couple résistant d'un système à fluide tel que ventilateur ou pompe, qui doit être entraîné par le moteur.

Partant de ces considérations, l'invention consiste à agencer le dispositif limiteur L du courant d'alimentation de manière à établir une limitation de ce courant en fonction d'un paramètre de fonctionnement du moteur selon une loi (représentée par la courbe g sur la figure 3) qui tient compte de la variation de la charge (courbe 7) entraînée par le moteur en fonction dudit paramètre; la loi de limitation n'autorise qu'un courant maximum Il légèrement supérieur, par exemple supérieur de l'ordre de 2A, à celui Io nécessaire au fonctionnement normal, à pleine puissance. La loi de limitation du courant est prévue pour assurer, au démarrage du moteur, une garde suffisante pour obtenir une montée en vitesse satisfaisante du moteur. Ainsi, s'il y a ralentissement on dispose d'un courant plus fort, donc d'un couple supérieur pour essayer de continuer la rotation, sinon il y aurait décrochement jusqu'à l'arrêt éventuellement.

Pratiquement à la courbe g, qui représente la loi de limitation de l'intensité du courant en fonction de la vitesse, correspond la courbe k qui représente la loi de limitation du couple du moteur électrique résultant de cette limitation d'intensité. Cette courbe k a même allure que la courbe g. La garde h permettant d'assurer la montée en vitesse est égale à la différence des ordonnées à l'origine des courbes k et 7. En l'absence de limitation du courant, à pleine puissance, le couple d'accélération disponible à vitesse nulle est égal à H (différence entre les ordonnées à l'origine des courbes 5 et 7) bien supérieure à h. Par exemple H est supérieure à 4h. Ceci n'est qu'un exemple non limitatif; fréquemment, on ne souhaite pas d'accélération élevée pour aller vers les hautes vitesses et on n'a donc pas besoin de couple important à basse vitesse.

Dans les exemples envisagés et sur le diagramme de la figure 3, le paramètre de fonctionnement du moteur pris en considération est la vitesse de rotation de ce moteur. D'autres paramètres pourraient être pris en considération tels que la charge supportée par le moteur ou tout autre paramètre donnant une information sur le fonctionnement actuel du moteur électrique.

Une telle loi de limitation du courant permet d'éviter des surintensités à vitesse faible, sans altérer la vitesse d'équilibre, par exemple No à pleine puissance.

Avantageusement la courbe g représentant la loi de variation du courant autorisée par le dispositif L, en fonction de la vitesse de rotation du moteur, présente une partie ascendante 9 suivie d'un palier 10 sensiblement horizontal, correspondant à l'intensité maximale II admise par le dispositif L.

La partie ascendante 9 a sensiblement la forme d'un segment de droite ayant une pente positive, c'est-à-dire que l'intensité limite autorisée par le dispositif L augmente progressivement en fonction de la vitesse de rotation du moteur depuis la vitesse nulle jusqu'à une vitesse Nd au-delà de laquelle l'intensité est maintenue à la valeur limite supérieure sensiblement constante II.

La courbe k représentant la loi de variation du couple moteur comprend une partie rectiligne ascendante 9k, correspondant à 9, et un palier 10k, correspondant à 10.

La pente moyenne de la partie ascendante 9k peut être sensiblement égale, supérieure ou inférieure à la pente moyenne de la partie de la courbe 7 du couple résistant située au-dessous du segment 9k.

Le palier 10 correspond à l'intensité II.

A vitesse nulle, le point représentatif du courant correspond au point e, c'est-à-dire à une valeur suffisante de l'intensité pour assurer un démarrage franc, mais beaucoup plus faible que l'intensité Imo qui serait apparue, au démarrage, pour atteindre le point de fonctionnement normal 8, en l'absence d'une limitation du courant selon l'invention.

Avec une telle limitation, on atteint le point 8 de fonctionnement, lors du lancement normal du moteur, en parcourant sur la courbe k du couple, le segment j, d (figure 3) correspondant à la partie 9h, puis le segment d, c, ce dernier point c étant constitué par l'intersection du palier 10k et de la courbe 5 représentant la variation du couple du moteur à pleine puissance. Enfin, le segment c, 8 sur la courbe 5 est parcouru jusqu'à atteindre le point d'équilibre de fonctionnement du moteur.

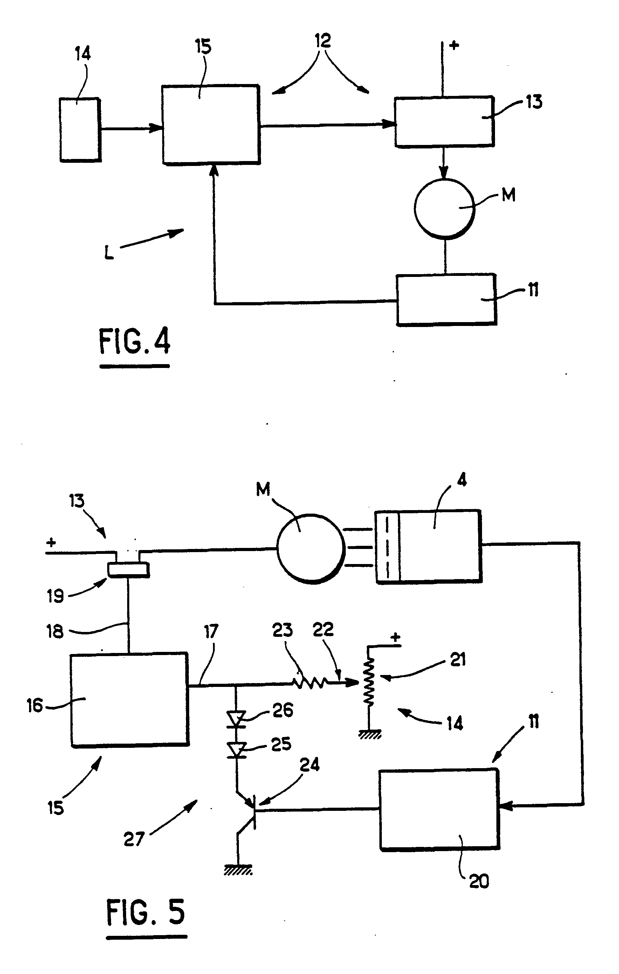

On se reporte, maintenant, au schéma de la figure 4 du dispositif limiteur L. Ce dernier comprend des moyens 11 sensibles au paramètre de fonctionnement du moteur électrique M considéré; dans l'exemple envisagé ce paramètre est constitué par la vitesse de rotation du moteur et les moyens 11 sont propres à fournir une information sur cette vitesse de rotation.

Les moyens 11, sensibles à la vitesse de rotation du moteur, peuvent être constitués par tout capteur de vitesse approprié. Ces moyens 11 sont propres à établir un signal de sortie avantageusement constitué par une tension électrique, représentatif de la valeur de la vitesse de rotation du moteur M.

Le dispositif limiteur L comprend, en outre, des moyens 12 de commande du courant d'alimentation du moteur électrique en fonction du signal de sortie des moyens 11.

De préférence, l'alimentation du moteur M est assurée par un dispositif hacheur ou découpeur 13 appartenant aux moyens de commande 12. Le rapport cyclique du dispositif hacheur peut être réglé par des moyens d'ajustement 14 propres à agir sur un générateur 15 de rapport cyclique variable. Le signal de sortie des moyens sensibles 11 est également envoyé sur une entrée du générateur 15 de manière à intervenir sur la valeur du rapport cyclique.

Plus précisément, comme illustré par la figure 5, le générateur de rapport cyclique variable 15 est constitué par un circuit 16 "PWM" (pulse width modulator"—modulateur de largeur d'impulsion) qui convertit les variations d'une tension de commande envoyée sur une entrée 17 en variations de rapport cyclique d'un signal rectangulaire fourni sur sa sortie 18. La fréquence du signal rectangulaire peut être définie, par exemple, par deux composants fixes: résistance et capacité, non représentés sur le dessin.

Cette fréquence, qui correspond à la fréquence de hachage, peut être de l'ordre de 20 Khz.

Le dispositif hacheur 13 comprend un transistor MOS à effet de champ (FET) 19 de préférence à canal N. La grille de ce transistor est reliée à la sortie 18 du circuit PWM.

Les moyens 11 sensibles à la vitesse comprennent un convertisseur fréquence/tension 20 qui transforme les variations de fréquence des impulsions ou des signaux sur son entrée en variation d'une tension continue. Il n'y a pas d'autre fréquence que celle due aux variations de fréquence d'entrée. La fréquence des signaux envoyés à l'entrée du convertisseur 20 dépend directement de la vitesse de rotation du moteur M.

Les moyens d'ajustement 14 sont du type manuels et comprennent un potentiomètre 21 branché entre la borne + d'une source de tension continue et la masse; le curseur 22 de ce potentiomètre permet de prélever une tension réglable qui est appliquée, par l'intermédiaire d'une résistance 23 sur l'entrée 17 du circuit 16.

La sortie du convertisseur 20 est reliée à la base d'un transistor 24, de type p-n-p dans l'exemple de la figure 5. Le collecteur du transistor 24 est relié à la masse tandis que son émetteur est relié à l'entrée 17 par l'intermédiaire de deux diodes 25, 26 montées en série et conduisant dans le sens qui va de l'entrée 17 à l'émetteur du transistor 24.

Le potentiomètre 21 représente la commande de vitesse et permet de régler la vitesse de rotation au point d'équilibre (voir figure 2), c'est-à-dire de choisir soit le point 8 (pleine puissance), soit un autre point tel que 8' (puissance réduite).

On voit que l'ensemble du transistor 24 et des diodes 25, 26 constitue des moyens de comparaison 27 entre le signal de sortie provenant du convertisseur 20 et le signal provenant du potentiomètre 21, constituant les moyens d'ajustement.

Le convertisseur 20 est réglé pour donner sur sa sortie, et donc sur la base du transistor 24, une tension équivalente à celle fournie par le potentiomètre de commande 21 pour exprimer la vitesse du moteur.

Les deux diodes 25 et 26, par la chute de tension Vd qu'elles établissent, ainsi que le transistor 24 par la chute de tension Vbe qui existe entre la base et l'émetteur, établissent un décalage entre les signaux provenant de la sortie du convertisseur 20 et du potentiomètre 21.

En tenant compte de ce décalage de tension introduit par les diodes 25, 26 et le transistor 24 entre sa base et son émetteur, le signal de tension provenant du convertisseur 20 sera prioritaire au niveau de l'entrée 17 du circuit PWM par rapport au signal provenant du potentiomètre 21, et limitera le rapport cyclique et donc le courant dans le moteur M en fonction de la vitesse de ce moteur.

Si la tension à la sortie du convertisseur 20, appliquée à la base du transistor 24, est inférieure à la somme de celle prélevée par le curseur 22 du potentiomètre et des chutes de tension dans les diodes et le transistor 24, ce dernier passe à l'état conducteur et la tension à l'entrée 17 est incorporée par le convertisseur (moyennant le décalage de 24, 25, 26) et non plus par le potentiomètre 21.

Ce mode de fonctionnement correspond, sur le diagramme de la figure 3, à des vitesses de rotation inférieures à celles correspondant au point c, pour la pleine puissance.

Si, par contre, la somme de la tension prélevée par le curseur 22 et des susdites chutes de tension est inférieure à la tension à la sortie du convertisseur 20, le transistor 24 se bloque, et la tension sur l'entrée 17 du circuit 16 correspond à celle fournie par le curseur 22.

Ce mode de fonctionnement est obtenu pour des vitesses correspondant, sur le diagramme de la figure 3, au segment -c, 8 de la courbe 5.

Ainsi, les moyens de comparaison 27 commandent un rapport cyclique qui correspond au plus faible des deux signaux fournis respectivement sur la sortie du convertisseur 20 et sur le curseur 22.

Si la vitesse du moteur électrique M devient nulle, en particulier si, ce moteur se bloque, la tension sur l'entrée 17 du circuit 16 correspond à la chute de tension dans les diodes 25 et 26 soit $2Vd$ si les deux diodes entraînent la même chute de tension $Vd$, augmentée de la chute de tension $Vbe$ entre base et émetteur du transistor 24.

Toutefois, si la tension prélevée par le curseur 22 est inférieure à la somme de ces chutes de tension, cette tension plus faible provenant de la commande 21 sera respectée sous forme d'un courant plus faible au niveau du moteur M.

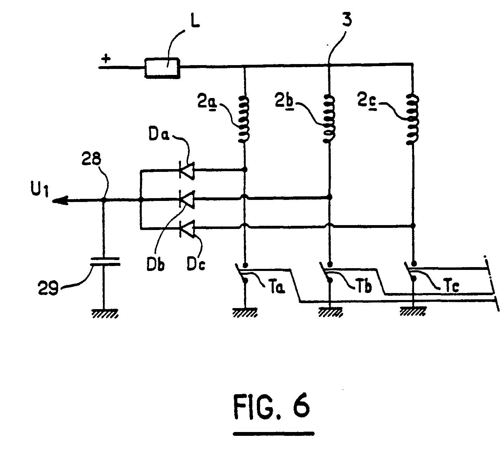

En se reportant à la figure 6 on peut voir un schéma d'un montage électrique permettant de récupérer les énergies de surtension des enroulements 2a, 2b, 2c du stator.

En effet, le transistor MOS à effet de champ 19 du dispositif hacheur 13 est choisi de préférence du type à canal N et nécessite, pour sa commande, une tension supérieure d'environ 10V à celle de sa source, c'est-à-dire une tension de l'ordre de 25V ou plus qui est supérieure à la tension d'alimentation d'une batterie ou d'un accumulateur classiquement utilisé dans un véhicule automobile.

Les transistors MOS à canal P fonctionnent avec des tensions plus faibles, mais sont moins favorables en performances et en prix.

Comme la puissance nécessaire pour la commande du transistor MOS de canal N est faible, il est avantageux de récupérer les énergies de surtension des enroulements 2a, 2b, 2c pour établir une tension auxiliaire U1 supérieure à la tension d'alimentation.

Pour celà, les extrémités des enroulements 2a, 2b, 2c opposées à celles reliées au point commun 3, sont elles mêmes reliées par des diodes Da, Db, Dc, à un point commun 28. Du fait que le point commun 3 est relié à la borne +, l'anode des diodes Da, Db, Dc est reliée à l'extrémité de l'enroulement correspondant en amont des moyens de commutation Ta, Tb, Tc; quel que soit l'état ouvert ou fermé de ces moyens de commutation, la liaison entre l'enroulement et l'anode de la diode associée subsiste. Les cathodes des diodes sont reliées au point 28.

Un condensateur 29 est branché entre le point 28 et la masse; La tension auxiliaire U1, supérieure à la tension d'alimentation, est ainsi disponible entre le point 28 et la masse pour commander le transistor 19, du type MOS de canal N.

Il est à noter que l'énergie de surtension des enroulements 2a, 2b, 2c peut n'être que celle de fin de commande de l'enroulement (ou de la phase) lorsque l'on est à puissance maximale; dans ce cas, en effet, le transistor de découpage 19 est fermé en permanence, mais pour cela, il faut disposer également de la tension de commande surélevée.

Une application particulièrement intéressante du dispositif limiteur de l'invention concerne un moteur électrique destiné à entraîner un ventilateur ou une soufflante à bord d'un véhicule automobile. Comme déjà expliqué précédemment, le couple résistant opposé par une telle charge est sensiblement proportionnel au carré de la vitesse et correspond sensiblement à la courbe 7 des figures 2 et 3.

Le fonctionnement du moteur électrique, à courant continu, alimenté par un dispositif limiteur selon l'invention, pour entraîner une telle charge, résulte immédiatement des explications précédentes.

Si les moyens d'ajustement 14, et plus précisément le potentiomètre 21 (figure 5), sont réglés sur la vitesse maximale, correspondant à la puissance maximale du moteur, la courbe du couple du moteur électrique, en l'absence de limitation, correspond à la courbe 5 des figures 2 et 3.

Comme déjà expliqué, l'intensité du courant va croître, en fonction de la vitesse, selon la courbe de limitation g tandis que le couple du moteur va croître selon la courbe k jusqu'à rejoindre la courbe 5 du couple normal au point c; à partir de ce point, le dispositif limiteur n'a plus d'influence puisque l'intensité demandée par le moteur est inférieure à celle que peut fournir le dispositif limiteur.

En quelque sorte, la commande effectuée à l'aide des moyens d'ajustement 14 exprime la valeur du courant nécessaire au point de fonctionnement désiré, mais cette valeur ne sera effectivement autorisée par le dispositif limiteur L que progressivement au fur et à mesure que le moteur prend sa vitesse.

Si le moteur se bloque, l'intensité du courant dans le stator va augmenter, suivant la courbe normale 6, (figure 3) dans le sens des vitesses décroissantes, jusqu'au palier 10. Le point représentatif de l'intensité va ensuite se déplacer sur ce palier 10 puis sur le segment 9 (c'est-à-dire sur la courbe g) pour prendre la valeur e lorsque le moteur est arrêté.

Un processus semblable se déroulerait, avec des valeurs moins fortes, dans le cas où les moyens d'ajustement 14 afficheraient une puissance du moteur et donc une vitesse à l'équilibre, respectivement inférieures à la puissance et à la vitesse maximales.

Avec un tel dispositif limiteur, les différents composants électroniques, notamment les transistors, sont convenablement protégés, sans nécessiter d'autre circuit.

A titre d'exemple, à 3000 tours par minute, un moteur électrique entraînant un ventilateur d'automobile, sous une tension de 14,4V, ne consomme généralement pas plus de 15A. Un tel moteur dépourvu d'un limiteur de courant conforme à l'invention, laisserait passer près de 50A, sous la même tension, s'il était bloqué; s'il fallait prévoir des transistors susceptibles d'accepter une intensité de 50A, pour le cas de blocage de la charge, le coût des moyens de commutation électronique deviendrait prohibitif.

Le dispositif limiteur de l'invention permet d'empêcher une telle surintensité et donc l'utiliser, pour les moyens de commutation électronique, en toute sécurité, des transistors prévus, pour accepter l'intensité maximale normale du moteur.

Par la même occasion, la protection du moteur électrique contre un échauffement exagéré, lors d'un blocage en rotation, est assurée.

**Revendications**

1. Dispositif limiteur du courant d'alimentation pour un moteur électrique à courant continu, ce moteur étant destiné à entraîner une charge qui oppose un couple résistant augmentant en fonction de la vitesse de rotation, le dispositif limiteur étant agencé pour établir une limitation du courant en fonction de la vitesse de rotation du moteur selon une loi (g) qui tient compte de la variation (7) de la charge entraînée par le moteur en fonction de la vitesse de rotation, ce dispositif étant destiné à un moteur électrique à commutation électronique, moteur dont le stator comporte plusieurs enroulements (2a, 2b, 2c) décalés angulairement et alimentés successivement par des moyens de commutation électronique (Ta, Tb, Tc), pour créer un champ tournant, caractérisé par le fait qu'il n'autorise qu'un courant (Il) légèrement supérieur à celui nécessaire en fonctionnement normal, et que la loi (g) de limitation du courant est prévue pour assurer, au démarrage du moteur, une garde (h) suffisante pour assurer une montée en vitesse satisfaisante du moteur, cette loi (g) de variation du courant, en fonction de la vitesse de rotation du moteur, présentant une partie ascendante (9), suivie d'un palier (10).

2. Dispositif selon la revendication 1 caractérisé par le fait que la partie ascendante (9) de la loi (g) de variation du courant est formée sensiblement par un segment de droite.

3. Dispositif limiteur selon l'une quelconque des revendications précédentes caractérisé par le fait qu'il comprend des moyens (11) sensibles au paramètre de fonctionnement du moteur constitué par la vitesse de rotation propres à établir un signal de sortie représentatif de la valeur du paramètre et des moyens de commande (12) du courant d'alimentation du moteur électrique (M) en fonction de ce signal de sortie.

4. Dispositif selon la revendication 3 pour moteur électrique alimenté par un dispositif hacheur (13) à rapport cyclique réglable par des moyens d'ajustement (14), caractérisé par le fait qu'il comprend des moyens de comparaison (27) du signal de sortie des moyens sensibles (11) et d'un signal provenant des moyens d'ajustement (14, 21), ces moyens de comparaison (27) étant propres à commander le rapport cyclique correspondant au plus faible de ces deux signaux.

5. Dispositif selon la revendication 4 caractérisé par le fait qu'il comprend, pour commander le rapport cyclique, un circuit (16) du type "PWM" propre à convertir les variations d'une tension de commande en variation du rapport cyclique d'un signal rectangulaire; un convertisseur fréquence/tension (20) qui reçoit, à l'entrée, des signaux dont la fréquence dépend de la vitesse de rotation du moteur (M) et qui fournit, à sa sortie, une tension image de cette vitesse; des moyens d'ajustement manuel, notamment constitués par un potentiomètre (21), de la valeur du rapport cyclique et des moyens (27) pour comparer le signal de sortie du convertisseur fréquence/tension (20) et celui des moyens d'ajustement manuel (21), ces moyens de comparaison étant propres à faire établir le rapport cyclique qui correspond au plus faible signal provenant du convertisseur (20) ou des moyens d'ajustement (21).

6. Dispositif selon la revendication 5 caractérisé par le fait que les moyens de comparaison comprennent un transistor (24) dont la base est reliée à la sortie du convertisseur (20) et dont l'émetteur est relié, notamment par deux diodes (25, 26) montées en série, au curseur (22) du potentiomètre (21).

7. Dispositif limiteur selon l'une quelconque des revendications précédentes pour moteur électrique alimenté par un dispositif hacheur (13) comprenant un transistor MOS à effet de champ (FET) à canal N, caractérisé par le fait qu'il est agencé de manière à récupérer les énergies de surtension des enroulements (2a, 2b, 2c) du stator, qui apparaissent, notamment en fin de commande de chaque enroulement, pour établir la tension de fonctionnement du transistor MOS (19) de canal N.

8. Dispositif limiteur selon l'une quelconque des revendications précédentes caractérisé par le fait qu'il est appliqué à un moteur à commutation électronique dont le stator comporte trois phases ou enroulements (2a, 2b, 2c), commandés, chacun, par un seul transistor ou élément interrupteur équivalent (Ta, Tb, Tc).

9. Dispositif limiteur selon l'une quelconque des revendications précédentes caractérisé par le fait qu'il est utilisé pour un moteur électrique entraînant, notamment à bord d'un véhicule automobile, un ventilateur, une turbine, une pompe ou analogue qui présente un couple résistant sensiblement proportionnel au carré de la vitesse de rotation, la loi de variation (g) de la limitation de l'intensité en fonction de la vitesse de rotation du moteur étant alors choisie sensiblement linéaire, avec une pente positive, dans une première partie (9) et avec une ordonnée (e) à l'origine qui correspond à un couple de démarrage relativement faible.

10. Moteur électrique à courant continu, à commutation électronique caractérisé par le fait qu'il est équipé d'un dispositif limiteur selon l'une quelconque des revendications précédentes.

**Patentansprüche**

1. Speisestrombegrenzer für einen Gleichstromelektromotor, der dazu bestimmt ist, eine Bürde anzutreiben, die einem Widerstandsmoment entgegenwirkt, welches sich als Funktion der Drehzahl erhöht, wobei der Begrenzer so ausgelegt ist, daß eine Strombegrenzung entsprechend der Motordrehzahl nach einer Kurve (g) bewirkt wird, welche die Änderung (7) der durch den Motor angetriebenen Bürde entsprechend der Drehzahl berücksichtigt, und wobei diese Vorrichtung für einen Elektromotor mit elektronischer Umschaltung bestimmt ist, dessen Stator mehrere Wicklungen (2a, 2b, 2c) enthält, die winklig versetzt sind und zur Erzeugung eines Rotationsfeldes nacheinander durch elektronische Umschaltmittel (Ta, Tb, Tc) gespeist werden, dadurch gekennzeichnet, daß nur ein Strom (II) zugelassen wird, der nur wenig größer ist als der Strom, der bei normalem Betrieb erforderlich ist, und daß die Strombegrenzungskurve (g) dafür vorgesehen ist, beim Anlaufen des Motors einen ausreichenden Schutz (h) zu gewährleisten, um eine befriedigende Drehzahlerhöhung des Motors sicherzustellen, wobei dieses Stromänderungsgesetz (g) entsprechend der Motordrehzahl einen ansteigenden Teil (9) mit daran anschließendem Plateau (10) aufweist.

2. Vorrichtung nach Anspruch 1, dadurch gekennzeichnet, daß der ansteigende Teil (9) der Stromänderungskurve (g) im wesentlichen aus dem Segment einer Geraden besteht.

3. Begrenzungsvorrichtung nach einem der vorherigen Ansprüche, dadurch gekennzeichnet, daß sie Mittel (11) enthält, die gegenüber dem Motorfunktionsparameter, bestehend aus der Drehzahl, empfindlich und geeignet sind, ein Ausgangssignal zu erzeugen, welches für den Wert des Parameters und der Mittel (12) zur Steuerung des Speisestroms des Elektromotors (M) entsprechend diesem Ausgangssignal repräsentativ ist.

4. Vorrichtung nach Anspruch 3 für einen Elektromotor, der durch einen Zerhacker (13) mit zyklischem Verhältnis gespeist wird, regelbar durch Verstellmittel (14), dadurch gekennzeichnet, daß sie Mittel (27) zum Vergleich des Ausgangssignals der empfindlichen Mittel (11) und eines von den Verstellmitteln (14, 21) ausgehenden Signals aufweist, wobei diese Vergleichsmittel (27) geeignet sind, das dem schwächstem dieser beiden Signale entsprechende zyklische Verhältnis zu steuern.

5. Vorrichtung nach Anspruch 4, dadurch gekennzeichnet, daß sie zur Steuerung des zyklischen Verhältnisses eine Schaltung (16) vom Typ "PWM" enthält, geeignet zur Umwandlung der Schwankungen einer Steuerspannung in eine Veränderung des zyklischen Verhältnisses eines Rechtecksignals, einen Spannungs-/Frequenz-Umformer (20), der am Eingang Signale empfängt, deren Frequenz von der Drehzahl des Motors (M) abhängt und der am Ausgang eine Abbildspannung liefert, insbesondere aus einem Potentiometer (21) bestehende Mittel zur manuellen Verstellung des Werts des zyklischen Verhältnisses sowie Mittel (27) zum Vergleich des Ausgangssignals des Spannungs-/Frequenz-Umformers (20) mit demjenigen der manuellen Verstellmittel (21), wobei diese Vergleichsmittel geeignet sind, das zyklische Verhältnis herzustellen, welches dem schwächsten Signal entspricht, das vom Umformer (20) oder von den Verstellmitteln (21) ausgeht.

6. Vorrichtung nach Anspruch 5, dadurch gekennzeichnet, daß die Vergleichsmittel einen Transistor (24) einschließen, dessen Sockel mit dem Ausgang des Umformers (20) verbunden ist und dessen Emitter insbesondere durch zwei in Reihe geschaltete Dioden (25, 26) mit dem Schleifkontakt (22) des Potentiometers (21) verbunden ist.

7. Begrenzungsvorrichtung nach einem der vorherigen Ansprüche für einen Elektromotor, der durch einen Zerhacker (13) gespeist wird, der einen MOS-Feldeffekttransistor (FET) für Kanal N enthält, dadurch gekennzeichnet, daß sie zur Rückgewinnung der Überspannungsenergien der Wicklungen (2a, 2b, 2c) des Stators geeignet ist, die insbesondere am Ende der Steuerung jeder Wicklung auftreten, um die Betriebsspannung des MOS-Transistors (19) für Kanal N festzulegen.

8. Begrenzungsvorrichtung nach einem der vorherigen Ansprüche, dadurch gekennzeichnet, daß sie an einen Motor für elektronische Umschaltung angeschlossen wird, dessen Stator drei Phasen oder Wicklungen (2a, 2b, 2c) enthält, die jeweils durch einen einzigen Transistor oder ein gleichwertiges Ausschaltelement (Ta, Tb, Tc) gesteuert werden.

9. Begrenzungsvorrichtung nach einem der vorherigen Ansprüche, dadurch gekennzeichnet, daß sie für einen Elektromotor verwendet wird, der, insbesondere in einem Kraftfahrzeug, ein Gebläse, eine Turbine, eine Pumpe oder ein ähnliches Teil antreibt, mit einem Widerstandsmoment im wesentlichen proportional zum Quadrat der Drehzahl, so daß die Kurve (g) der Änderung der Strombegrenzung entsprechend der Motordrehzahl im wesentlichen linear gewählt wird, mit einer positiven Flanke in einem ersten Teil (9) und einer Ordinaten (o) am Ausgangspunkt, die einem relativ schwachen Anfahrmoment entspricht.

10. Gleichstromelektromotor für elektronische Umschaltung, dadurch gekennzeichnet, daß er mit einer Begrenzungsvorrichtung nach einem der vorherigen Ansprüche ausgerüstet ist.

**Claims**

1. A supply current limiter for a direct current electric motor, the said motor being adapted to drive a load in opposition to a resistive torque which increases as a function of the speed of rotation, the current limiter being arranged to establish a limitation of the current as a function of the speed of rotation of the motor in accordance with a characteristic (g) which represents the variation (7) in the load driven by the motor as a function of the speed of rotation, the said current limiter being adapted for an electric motor having electronic commutation, with the stator of the said motor comprising a plurality of windings (2a, 2b, 2c) which are offset angularly from each other and which are supplied successively by electronic commutation means (Ta, Tb, Tc), whereby to create a rotating field, characterised by the fact that the current limiter authorises a current (II) which is only slightly greater than that required for normal operation, and that the current limitation characteristic (g) is such as to ensure, during starting of the engine, an initial value (h) of the torque sufficient to ensure a satisfactory increase in motor speed, with the said characteristic (g), governing the variation in the current as a function of the speed of rotation of the motor, having a rising portion (9) followed by a flat portion (10).

2. A current limiter according to Claim 1, characterised by the fact that the rising portion (9) of the current variation characteristic (g) comprises substantially a straight line segment.

3. A current limiter according to either one of the preceding Claims, characterised by the fact that it includes means (11) responsive to the operating parameter of the motor which is constituted by the speed of rotation, the said means being such as to produce an output signal representing the value of the said parameter, and control means (12) for the supply current for the electric motor (M) as a function of the said output signal.

4. A current limiter according to Claim 3 for an electric motor, supplied through a chopping circuit (13) with a cyclic response adjustable by adjusting means (14), characterised by the fact that it includes comparator means (27) for comparing the output signal from the said motor parameter responsive means (11) with a signal from the adjustment means (14, 21), the said comparator means (27) being adapted to control the cyclic response corresponding to the weaker of the said two signals.

5. A current limiter according to Claim 4, characterised by the fact that it includes, for controlling the said cyclic response, a pulse width modulator (PWM) circuit (16) which is adapted to convert the variations in a control voltage by varying the cyclic response of a rectangular signal; a frequency/voltage convertor (20) which receives, at its input, signals of a frequency that is dependent on the speed of rotation of the motor (M), and which supplies at its output a voltage representing the said speed; manual adjusting means, comprising in particular a potentiometer (21), for adjusting the value of the cyclic response, and means (27) for comparing the output signal from the frequency/voltage convertor (20) with that of the manual adjusting means (21), the said comparator means being adapted to cause the cyclic response which corresponds to the weakest signal from the convertor (20) or from the adjusting means (21) to be established.

6. A current limiter according to Claim 5, characterised by the fact that the comparator means include a transistor (24), the base of which is connected to the output of the convertor (20), the emitter of the transistor being connected, in particular through two diodes (25, 26) mounted in series, to the cursor (22) of the potentiometer (21).

7. A current limiter according to any one of the preceding Claims for an electric motor supplied through a chopping circuit (13), which comprises an MOS field effect (FET) transistor with an N-type conducting channel, characterised by the fact that it is so arranged as to recuperate the over-voltage energy from the stator windings (2a, 2b, 2c) which appear, in particular at termination of the control of each winding, so as to establish the operating voltage of the MOS transistor (19) having the N-type conducting channel.

8. A current limiter according to any one of the preceding Claims, characterised by the fact that it is applied to a motor with electronic commutation, in which the stator comprises three phases or windings (2a, 2b, 2c), each of which is controlled by a single transistor or equivalent interruptor element (Ta, Tb, Tc).

9. A current limiter according to any one of the preceding Claims, characterised by the fact that it is employed for an electric motor which drives, in particular in an automotive vehicle, an air blower, a turbine, a pump or the like which produces a resistive torque substantially proportional to the square of the speed of rotation, the characteristic (g) of variation of the limitation in current intensity as a function of the speed of rotation of the motor being then chosen so as to be substantially linear with a positive slope in a first portion (9), and having an ordinate value at the origin which corresponds to a relatively small starting torque.

10. A direct current electric motor with electronic commutation, characterised by the fact that it is provided with a torque limiter in accordance with any one of the preceding Claims.

FIG. 1

FIG. 2

FIG. 3

FIG. 4

FIG. 5

2

FIG. 6